(19) Europäisches Patentamt
European Patent Office
Office européen des brevets

(11) EP 0 321 878 B1

# (12) EUROPÄISCHE PATENTSCHRIFT

(45) Veröffentlichungstag und Bekanntmachung des Hinweises auf die Patenterteilung: **24.07.1996 Patentblatt 1996/30**

(21) Anmeldenummer: **88121095.9**

(22) Anmeldetag: **16.12.1988**

(51) Int. Cl.[6]: **C08F 255/06**, C08F 291/02, C08L 51/04, C08L 27/06, C08L 25/06, C08L 33/12, C08L 69/00, C08L 9/00 // (C08F255/06, 220:14, 220:12)

## (54) Schlagzäh-Modifizierungsmittel für Kunststoffe

Impact modifier for plastic materials

Agent de modification de la résistance à l'impact pour matières plastiques

(84) Benannte Vertragsstaaten:
**AT BE CH DE ES FR GB IT LI NL SE**

(30) Priorität: **19.12.1987 DE 3743199**

(43) Veröffentlichungstag der Anmeldung: **28.06.1989 Patentblatt 1989/26**

(73) Patentinhaber: **Röhm GmbH**
**D-64293 Darmstadt (DE)**

(72) Erfinder:
- **Siol, Werner, Dr.**
  **D-6100 Darmstadt-Eberstadt (DE)**
- **Fischer, Jens-Dieter, Dr.**
  **D-6100 Darmstadt (DE)**
- **Koralewski, Klaus**
  **D-6086 Riedstadt (DE)**
- **Terbrack, Ulrich**
  **D-6107 Reinheim 2 (DE)**

(56) Entgegenhaltungen:
- **DATABASE CHEMICAL ABSTRACTS, (HOST:STN), Band 108, Nr. 10, 1987, Zusammenfassung no. 76464y, Columbus, Ohio, US; & JP-A-62 151 415 (SUMITOMO CHEMICAL CO., LTD) 06-07-1987**
- **DATABASE CHEMICAL ABSTRACTS (HOST:STN), Band 99, Nr. 26, 1983, Zusammenfassung no. 213548r, Columbus, Ohio, US;**
- **& JP-A-58 104 939 (MITSUBISHI RAYON CO., LTD) 22-06-1983**
- **DATABASE CHEMICAL ABSTRACTS (HOST:STN), Band 107, Nr. 18, 1987, Zusammenfassung Nr. 155738y, Columbus, Ohio, US; & JP-A-62 004 711 (SUMITOMO CHEM. CO., LTD) 10-01-1987**

EP 0 321 878 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Gebiet der Erfindung

Die Erfindung betrifft Schlagzäh-Modifizierungsmittel für Kunststoffe mit allgemeiner Anwendbarkeit.

Stand der Technik

Bei vielen Anwendungsbereichen von Kunststoffen spielt deren Zähigkeit bei Schlagbeanspruchung eine bedeutende Rolle. Der experimentell bestimmbare Wert der Kerb-Schlagzähigkeit (DIN 53 453) läßt Aufschlüsse zu, ob ein polymerer Werkstoff schlagartige mechanische Beanspruchungen aufnehmen kann, ohne spröde zu brechen, in anderen Worten, ob das Material in der Lage ist, die eingebrachte Energie durch reversible oder irreversible Verformung umzuwandeln.
Neben der Zähigkeit sind für einen modernen Konstruktionswerkstoff noch andere Eigenschaften von Bedeutung, wie z.B. der Elastizitätsmodul, die Festigkeit und Wärmeformbeständigkeit.
Eine Reihe von technisch wichtigen Kunststoffen, insbesondere Thermoplasten lassen hinsichtlich ihrer Schlagzähigkeit zu wünschen übrig.

Die Technik hat schon seit längerer Zeit die Aufgabe erkannt, relativ spröde Kunststoffe in technisch brauchbare Produkte mit verbesserter Schlagzähigkeit überzuführen.

Klassische Beispiele von Schlagzähmodifikation liegen beim schlagfesten Polystyrol vor. Dabei bedient man sich der Polymerisation von monomerem Styrol in dem Polybutadien gelöst ist. Bereits bei geringem Umsatz scheidet sich Polystyrol in Tropfenform ab. Wenn man die in Polymerisation begriffene Mischung rührt, erhält man mit steigendem Polystyrolgehalt eine Phasenumkehr, d.h. das Polybutadien bildet die disperse Phase. An der Phasengrenze kommt es durch Kettenübertragung zur Pfropfcopolymerisation. Dadurch wird der disperse Zustand stabilisiert und die Kautschuk-Pfropfteilchen werden in der Polystyrol-Matrix verankert. Besonders wirksam sind in der Regel Kapselteilchen, bei denen die vernetzte Polybutadienphase mit Hartphase teilweise gefüllt ist. Diese Kapselteilchen gewährleisten eine hohe Effektivität des eingesetzten Gummis. Diese Modellvorstellung läßt sich auf viele andere Schlagzäh-modifizierte Polymersysteme übertragen.
Bei ABS-Polymeren stellt die Matrix-Phase ("Hartphase") ein Styrol-Acrylnitril-Copolymeren, die disperse "Kautschuk"- oder "Zäh-Phase" ein Butadien-Acrylnitril-Copolymer dar. Ähnlich kann auch das an sich bereits deutlich schlagzähere PVC durch Katuschuk-Beimischung modifiziert werden. (Vgl. Ullmann's Encyclopädie der technischen Chemie, 4. Auflage, Bd. 15, S. 216, Verlag Chemie; Polymere Werkstoffe Herausg. H. Batzer Bd. III, Technologie 2, S. 20 - 23 Georg Thieme Verlag 1984). In der Literatur nehmen die Bemühungen der Technik um Schlagzähmodifizierung (Elastifizierung) marktüblicher Kunststoffe, insbesondere von Thermoplasten einen breiten Raum ein. So wird über die Elastifizierung von Polybutylenterephthalat, Polyamiden und Polycarbonaten mit Butadienpfropfpolymerisaten berichtet (D.Neuray, K.-H. Ott in Angew. Makromol. Chem. 98, 213 - 224 (1981)). Zur Modifizierung von Polyamiden sind neben linearen Polyolefinen auch die elastomeren EP(D)M-Polymerisate, ABR- und BR- sowie SBR-Pfropfpolymerisate empfohlen worden. Auch hier bildet der Thermoplast die kohärente Phase in die das feinverteilte Elastomere eingebettet ist (vgl. F. Fahnler, J. Merten in Kunststoffe 75 (3) 157 - 163 (1985)).
Betont wird, daß ohne "Ankopplung" physikalischer oder chemischer Natur an die Matrix auch bei steigendem Elastomerengehalt die Zähigkeit nicht signifikant verbessert werden kann.

Die Schlagzähmodifikation von Polycarbonat durch Zusatz von Elastomeren ist ebenfalls öfter beschrieben. So empfiehlt die DE-OS 30 31 524 den Zusatz von Alkyl(met)acrylatpolymeren und Olefin-Alkyl-acrylatcopolymeren. Auch der Zusatz von Butadien-Styrol-Copolymeren neben Alkyl(meth)acrylatpolymeren zu Polycarbonat ist beschrieben worden (FR-OS 2 464 387, GB-PS 2 057 461), ebenso der Zusatz von Polypropylen (US-PS) 4 245 058), organischen Siliconen (DE-OS 30 31 539), Polyester (US-PS 4 230 212), ABS-Copolymeren (DE-OS 3 248 709). Praktische Anwendung findet mit Polyolefin modifiziertes Polycarbonat in der Automobilindustrie.

Gebräuchliche Schlagzäh-Modifikatoren von Hart-PVC sind sowohl Produkte auf Additiv-Basis (wie z.B. chloriertes Polyethylen, MBS, Butylacrylat-MMA-Copolymer) als auch Pfropf-Copolymere (EVA, Polyacrylsäureester) (vgl. M.Arts et al. in Kunststoffe 75, 224 - 228 (1985); CH-PS 372 844; GB-PS 937 747). Für die Schlagzähmodifizierung von Acetalcopolymeren finden u.a. thermoplastische Polyurethane Anwendung. (Vgl. F. Kloose, E. Wolters Kunststoffe 75, (10) 735 - 739 (1985).

Zur Schlagzähmodifizierung von Polymethylmethacrylat (PMMA) werden beispielsweise mit gutem Erfolg Elastomere wie z.B. Polybutylacrylat-Gummipartikel die mit einer PMMA-Schale versehen sind, verwendet. (Vgl. DE-AS 10 76 377; DE-AS 11 27 086, FR-PS 1 164 299)

In der JP-A-62 151 415 werden Schlagzähe (Meth)acrylatharze beschrieben, die aber als solche und nicht als Schlagzähmodifizierungsmittel zum Einsatz kommen. Der Anteil der Dien-haltigen kautschukphasen wird mit 1-20 Gew-% angegeben

Auch in der JP-A-58 104 939 handelt es sich um Schlagzäh ausgerüstete (Meth)acrylatharze, deren Einsatz als Schlagzähmodifizierungsmittel nicht vorgesehen ist.

In der EP-A 0 144 231 werden spezifisch für thermoplastische Polycarbonate entwickelte Schlagzähmodifizierungsmittel vorgestellt, bestehend aus EPDM-kautschukphasen, die mit einem Copolymerisat aus Methylmethacrylat und N-Phenylmaleinimid gepfropft sind.

Im Stand der Technik bedient man sich vorwiegend des Kunstgriffs die Anbindung der "Zähphase" an die "Hartphase" durch Pfropfen des mit der Hartphase chemisch übereinstimmenden Monomeren auf die Zähphase zu bewirken. Dabei wird in aller Regel von dem allgemeinen Grundsatz ausgegangen, daß Gleiches sich in Gleichem löse und auf diesem Wege eine Verankerung der Zähphase in der Hartphase zustande kommt. Dieses Konzept bedeutet naturgemäß, daß für jeden Kunststoff, etwa PMMA, PVC, PS, PC ein jeweils anderes für den speziellen Fall optimiertes Schlagzäh-Modifizierungsmittel eingesetzt wird.

Aufgabe

So schien es einerseits zwar technisch höchst wünschenswert, aber gleichzeitig wohl unerreichbar, Schlagzähmodifizierungsmittel einer einzigen Art für verschiedene Kunststoff-Typen zur Verfügung zu haben. Außerdem sollten die Schlagzähmodifizierungsmittel gut zugänglich und im Anschluß an die bereits vorhandene Technologie einsetzbar sein.

Es wurden nun überraschenderweise Schlagzäh-Modifizierungsmittel gefunden, die den genannten Anforderungen der Technik in hohem Maße entsprechen.

Die Erfindung betrifft somit Polymerkompositionen hergestellt aus 40 bis 97 Gew.-% Kunststoff mit 3 - 60 Gew.-% eines Schlagzähmodifizierungsmittels bestehend aus:

A) 10 - 80 Gew.-% eines Polymeren der Formel

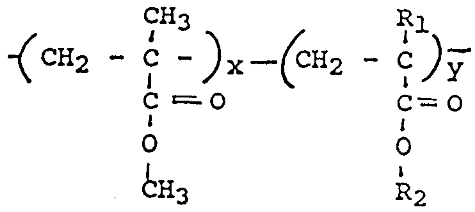

worin $R_1$ für H oder Methyl und $R_2$ für einen gegebenenfalls substituierten Cycloalkylrest mit 5 - 7 Kohlenstoffatomen im Ring, bevorzugt für Cyclohexyl, steht und x und y sich - gegebenenfalls zusammen mit weiteren in Mengen von 0 bis 20 Gew.-% vorhandenen Monomeren - zu 100 Gew.-% ergänzen mit der Maßgabe, daß y einen Bereich von 5 - 50 Gew.-% vorzugsweise 10 bis 40 Gew.-% bezeichnet, und
zu 90 - 20 Gew.-% aus

B) einem gegebenenfalls vernetzten Polymeren P mit einer Glastemperatur Tg < 10 Grad C, bevorzugt < -10 Grad C, das wenigstens teilweise mit A) kovalent verknüpft ist.

Soweit Endgruppen des Polymeren A) vorliegen, entsprechen sie den üblicherweise bei Polymerisation der entsprechenden Monomeren gebildeten.

Das Schlagzähmodifizierungsmittel

Das Schlagzähmodifizierungsmittel enthält definitionsgemäß die Komponente A). Dabei steht $R_1$ in der Formel vorzugsweise für Methyl. Bei den weiteren, in Mengen von 0 bis < 20, vorzugsweise 0,5 bis 20 Gew.-% vorhandenen Monomeren handelt es sich um radikalisch polymerisierbare Vinylverbindungen, insbesondere Vinylester und Derivate der Acrylsäure und der Methacrylsäure (Vgl. Ullmann's Encyclopädie der Techn. Chemie, 3. Auflage Bd. 14, S. 108 - 110, Urban & Schwarzenberg 1963). Insbesondere sind Ester der Acrylsäure und der Methacrylsäure mit von $R_2$ unterscheidbaren Alkylestern vorzugsweise mit 1 - 18 Kohlenstoffatomen von Interesse.

Möglich ist die Anwendung von bekannten vernetzenden Monomeren, d.h. Monomeren mit mindestens zwei radikalisch aktivierbaren Unsättigungen im Molekül wie z.B. die (Meth)acrylester von Di- und Polyolen beispielsweise Ethylenglykoldimethacrylat, oder insbesondere Allylverbindungen wie Triallylcyanurat. Sie kommen vorzugsweise in Mengen von 0,1 bis 5 Gew.-% zur Anwendung. Die in die Polymerkomponente A einzubauenden Monomeren sind bekannt. Ebenso kann bei der Herstellung der Komponente A ein Polymerisationsregler, beispielsweise vom Typ der

bekannten Schwefelregler (vgl. H. Rauch-Puntigam, Th.Völker, Acryl- und Methacrylverbindungen, Springer-Verlag 1967) mitverwendet werden, im allgemeinen in Anteilen zwischen 0,05 und 1 Gew.-% bezogen auf die Monomeren.

Das Polymerisat P der Komponente B) ist mit A) wenigstens teilweise, d.h. zu mehr als 5 Gew.-% [bezogen auf die Komponente B)] und bis zur Vollständigkeit kovalent verknüpft.
Definitionsgemäß handelt es sich um Polymere P mit einer Glastemperatur Tg < 10 Grad C, vorzugsweise < -10 Grad C, worunter Polymerisate fallen, die gewöhnlich unter der Bezeichnung "Kautschuk" zusammengefaßt werden. Gegebenenfalls sind die Polymeren der Komponente B) vernetzt. Die Bestimmung der Glastemperatur Tg kann nach A. TURI "Thermal Characterization of Polymeric Materials", pg. 169 ff, Academic Press, New York 1981 vorgenommen werden. Vorzugsweise sind die Polymeren P der Komponente B) ausgewählt aus der Gruppe, bestehend aus Polyolefinen, Polydienen, Polyacrylaten, Ethylenvinylacetatcopolymeren, Polysiloxan.
Bei den Polyolefinen handelt es sich vorzugsweise um Homo-bzw. Copolymeren des Ethylens, Propylens, Isobutylens (vgl. Ullmann's Encyclopädie der Techn. Chemie, 4. Auflage Bd. 19, S. 167 - 226, Verlag Chemie 1980) Im allgemeinen liegt das Molekulargewicht Mw der Polyolefine im Bereich 10 000 bis 1 000 000 (Bestimmung mit Gel-Permeationschromatographie).
Bei den Polydienen handelt es sich insbesondere um die einschlägig bekannten Kautschuk-Typen wie Polybutadien, Poly-2-chlorbutadien, Polyisopren (vgl. Ullmann loc.cit, 4. Auflage Bd. 13, S. 595 - 635). Das Molgewicht liegt in der Regel im Bereich 10 000 bis 1 000 000 Ethylen-Vinylacetat-Copolymere lassen sich hinsichtlich ihrer Zusammensetzung in gewissen Grenzen variieren. In der Regel liegt der Vinylacetat-Gehalt im Bereich 40 - 75 %, vorzugsweise 40 - 50 %. Im allgemeinen liegen die Molekularmassen im Bereich 30 000 bis 400 000. In der Regel beziehen sich diese Molekularmassenangaben der Kautschuktypen auf das Molekulargewicht der Polymeren, wie sie bei der Pfropfung der Hartphase (also vor der Pfropfung) eingesetzt werden. In einer bevorzugten Ausführungsform sind diese Elastomeren jedoch nach Pfropfung der Hartphase vernetzt. Dabei ist bevorzugt, daß die Elastomeren in Partikelform vorliegen, wobei der Durchmesser dieser Gummiteilchen im allgemeinen im Bereich 0,1 - 10 µm liegt, insbesondere sind Teilchen im Bereich von 0,2 - 5 µm bevorzugt. Besonders vorteilhaft sind solche Gummiteilchen, die Hartphaseneinschlüsse aufweisen. (Vgl. Ullmann loc.cit, Bd. 13. S. 623).
Unter den erfindungsgemäß zu verwendenden Polyacrylaten seien insbesondere solche verstanden, deren Monomerbausteine eine Glastemperatur Tg des resultierenden Homo- bzw. Copolymeren von < 10 Grad C, vorzugsweise < - 10 Grad C gewährleisten. Die Glastemperatur Tg der Homo- bzw. Mischpolymerisate ist bekannt bzw. läßt sich in bekannter Weise vorherbestimmen. (Vgl. R. Vieweg. F. Esser Kunststoff-Handbuch Bd. IX, S. 333 - 339, Carl Hanser Verlag 1975; J. Brandrup, E.H.Immergut, Polymer Handbook, III - 144 bis III - 148, John Wiley 1975)
Vorzugsweise werden die Polyacrylate durch Polymerisation in wäßriger Emulsion, teilweise auch in Suspension hergestellt. Besonders bei Polyacrylaten als Polymer P ist eine Herstellung des Schlagzähmodifizierungsmittels durch Emulsionspolymerisation bevorzugt (vgl. H. Rauch-Puntigam, Th. Völker, Acryl- und Methacrylverbindungen loc.cit S. 217 - 230), da auf diesem Wege besonders einfach Schlagzähmodifizierungsmittel mit einem definierten Teilchenaufbau erzeugt werden können. So ist es insbesondere bevorzugt, Latex-Teilchen mit einer äußeren Hülle aus dem Kunststoff A) aufzubauen, die im Inneren einen Gummi aus vernetztem Polyacrylat P enthalten. Besonders bevorzugt sind dabei Latex-Teilchen mit einem wenigstens dreistufigen Aufbau, also solche Teilchen, die in dem Polyacrylat P noch einen harten Polymerkern aufweisen. Insgesamt sollen diese Polyacrylatteilchen P (mit eingelagertem harten Kern) einen Druchmesser von 0,1 - 3 (bevorzugt 0,2 - 1) um aufweisen. Prinzipiell ist der Aufbau solcher Latexteilchen und die Isolierung des Polymersatfeststoffes in der deutschen Patentanmeldung P 33 00 256 bzw. der US-A 4 513 118 beschrieben.

Zweckmäßig arbeitet man bei der Emulsionspolymerisation im neutralen bzw. leicht sauren pH-Bereich, wobei die Verwendung langkettiger Alkylsulfate bzw. Alkylsulfonate als Emulgatoren günstig ist.
Als Initiatoren dienen zweckmäßig die einschlägig bekannten Azoverbindungen und organische oder anorganische Peroxide wie Kaliumpersulfat oder auch Redox-Systeme wie z.B. Persulfat/Bisulfit. Im allgemeinen liegt der Gehalt an Initiator im Bereich 0,001 bis 1 Gew.-% bezogen auf die Monomeren.
Zum Zweck der Suspensionspolymerisation werden vorwiegend nichtionogene, wasserlösliche Dispersionsstabilisatoren, sowie als Initiatoren organische Peroxide bzw. Azoverbindungen verwendet, die in den Monomeren löslich sind. (Vgl. H. Rauch-Puntigam, Th. Völker, Acryl- und Methacrylverbindungen, Springer-Verlag, Heidelberg 1967). Als Monomere seien besonders genannt: Ethylacrylat, Butylacrylat, 2-Ethylhexylacrylat sowie Alkoxylacrylate Vgl. US-PS 3 488 331). In der Regel enthalten diese Acrylatelastomeren noch vernetzende Monomeren (z.B. Allylmethacrylat)in Anteilen von 0,1 bis 5 Gew.-%. Besonders genannt seien Polybutylacrylat und Polyethylacrylat als Hauptbestandteil. .
Weiter sind als Kunststoffe P der Komponente B) von besonderem Interesse Ethylen-Propylen-Dien-Polymere (EPDM, vgl. Ullmann loc.cit Bd. 13, S. 619 - 621; Kirk-Othmer, Encyclopedia of Industrial Chemistry 3rd Ed. Vol. 8, pg. 492 - 500, Vol. 7, pg. 687, 693, J. Wiley; Zur Herstellung vgl. S. Cesca J. Polym. Sci, Macromol, Rev. 10, 1 (1975)). Als Dien-Komponente empfiehlt sich dabei insbesondere das Dicyclopentadien, das Ethylidennorbornen und das trans-Hexadien-1,4.
Die Molekularmassen Mw der (großtechnisch erzeugten) EPDM-Polymerisate liegen im allgemeinen im Bereich 200 000 bis 500 000. Die dynamischen Einfriertemperaturen werden mit - 45 Grad C bis -30 Grad C (Sequenztypen) angegeben. Bei Ethylengehalten von 45 - 60 Gew.-% sind die Terpolymeren völlig amorph. Bei Produkten mit Ethylengehalten von 70 - 80 % rechnet man mit teilkristallinen Ethylen-Sequenzen mit durchschnittlich 5 - 10 aufeinanderfolgenden Ethyleneinheiten (=sogenannte Sequenztypen).
Neben EPDM-Polymeren können auch EPTM-Polymere (Ethylen-Propylen-Trien) eingesetzt werden.

Weiter seien als Kunststoffe P der Komponente B) Polysiloxane (MQ, MPQ, MPVQ, nach ISO 1629, 1. Ausgabe 1976) genannt. Üblicherweise besitzen die gebräuchlichen Silikonkautschuke eine, durch spezielle Substituenten modifizierte Polydimethylsiloxan-Kette. (Vgl. Ullmann loc.cit Bd. 13, 628 - 663)
Die bei Raumtemperatur vernetzenden Typen sind endständig mit funktionellen Gruppen versehene Polysiloxane mit Molmassen von $10^4$ - $10^5$. Die heißvulkanisierenden Typen meist auf Basis von Polydimethylsiloxan (MQ) lassen sich mit schnell zerfallenden Diarlyperoxiden bei erhöhter Temperatur, beispielsweise bei 150 Grad C vernetzen.
Als ein Vorteil des erfindungsgemäßen Schlagzähmodifizierungsmittels kann u.a. gelten, daß in der Komponente B) jeweils an sich bekannte, insbesondere handelsübliche Polymere P eingesetzt werden können.

Die Herstellung des Schlagzähmodifizierungmittels kann in Anlehnung an bekannte Verfahren wie folgt vorgenommen werden.
Im allgemeinen gibt man das Polymerisat P vor, vorzugsweise in Form einer Lösung in einem zur weiteren Verarbeitung geeigneten Lösungsmittel, beispielsweise in einem für die radikalische Polymerisation der Monomeren gemäß A) geeigneten Lösungsmittel (c.f. H. Rauch-Puntigam, Th. Völker, Acryl- und Methacrylverbindungen loc.cit, Brandrup-Immergut, Polymer Handbook loc.cit.). Dabei ist u.a. die Tendenz der Lösungsmittel zu Übertragungsreaktionen zu berücksichtigen.
Genannt seien z.B. Ester wie Butylacetat, Ethylacetat, Kohlenwasserstoffe wie Toluol, Ketone wie Aceton. Man geht im allgemeinen von Lösungen mit einem Gehalt von 10 bis 60 Gew.-% des Polymeren P aus, denen die Monomeren und Polymerisationshilfsmittel beispielsweise durch Eintropfen zugesetzt werden. Die Polymerisation wird in der Regel bei erhöhter Temperatur beispielsweise im Bereich 80 bis 140 Grad C durchgeführt. Als Initiatoren können die an sich üblichen wie Peroxide oder Azoverbindungen verwendet werden (Vgl. H. Rauch-Puntigam, Th. Völker Acryl- und Methacrylverbindungen loc.cit). Bei tiefer siedenden Lösungsmitteln ist z.B. Dibenzoylperoxid anwendbar, während bei höher siedenden Lösungsmitteln z.B. tert.Butylverbindungen wie tert.Butylperoctoat zweckmäßig Anwendung finden können.
Als Lösungsmittel können aber auch die das Polymere A aufbauenden Monomeren selbst eingesetzt werden.

Vorteilhafterweise gewinnt man das Schlagzähmodifizierungsmittel dann durch Ausfällen aus der Lösung, beispielsweise mit Methanol als Fällungsmittel oder durch Entgasen auf dem Extruder. Speziell im Falle von Latex-Teilchen kann die Gewinnung des Schlagzähmodifizierungsmittels durch Fällung, Sprühtrocknung, Gefrierkoagulation oder durch Abquetschen mit dem Extruder gewonnen werden. .

Zur Schlagzähmodifizierung

Die zu modifizierenden Kunststoffe sind primär solche, deren Schlagzähigkeit/Kerbschlagzähigkeit von Natur aus die technisch geforderten bzw. erwünschten Werte nicht erreicht, insbesondere die eingangs unter "Stand der Technik" erwähnten insbesondere

Polyvinylchlorid (PVC)
Polystyrol (PS)
Poly-α-methylstyrol (P-α-MS)
Polycarbonat (PC)
Chlorkautschuk
Copolymere aus Methylmethacrylat und 20 - 50 %
α-Methylstyrol

insbesondere die als "Formmassen" bezeichneten Kunststoffmaterialien. Formmassen dienen als Rohstoffe für das spanlose Fließformen von Kunststoffen unter Druck- und Wärmeeinwirkung (Vgl. DIN 77 08, Blatt 1).

Wie oben ausgeführt, ist als zu modifizierender Kunststoff beispielsweise PVC geeignet, das Polymerisationsprodukt des Vinylchlorids, insbesondere mit einem K-Wert zwischen 55 und 80 (zur Bestimmung des K-Werts nach DIN 53 726 vgl. Vieweg-Krekeler, Kunststoff-Handbuch, Bd. 2, 1. Teil, pg. 58, Carl Hanser Verlag, 1983) bzw. einer Viskositätszahl J zwischen 74 und 170 $cm^3/g$. Besonders empfielt sich die Verwendung von PVC-Formmassen nach DIN 7748 E und 7749 E. Sofern PVC hart zur Anwendung kommt, liegt der K-Wert im allgemeinen bei 57 - 65, soweit PVC weich angewendet wird, liegt der K-Wert bei 65 - 70. Die Tg (dyn) liegt im allgemeinen bei 50 - 80 Grad C. Derartige Produkte sind als Granulate bzw. Pulver im Handelt. Genannt sei z.B. das PVC-Granulat LA 206 der Chemischen Werke Hüls.

Vorteile bietet die Schlagzähmodifikation auch bei Polystyrol (PS), (vgl. R. Vieweg, Kunststoff-Handbuch, Bd. 5, pg. 472 ff, Carl Hanser Verlag).
Im allgemeinen liegt dessen mittleres Molekulargewicht im Bereich 2,2 $10^5$ - 2,5 $10^5$. Die VICAT-Erweichungstemperatur von PS-Formmassen liegt vorteilhafterweise im Bereich > 80 Grad C bis über 110 Grad C. (Vgl. DIN 7741 E). Polystyrol-Formmasse kommt im allgemeinen in Form von Granulat (Körner von 2 - 4 mm Durchmesser), von Perlen oder

von Pulver in den Handel. Beispielhaft genannt sei etwa ein Polystyrol-Gleichkorngranulat (Type: 427K der BASF, Ludwigshafen).
In ähnlicher Weise wie für Polystyrol können die erfindungsgemäßen Schlagzäh-modifizierungsmittel auch bei Polymeren des α-Methylstyrols eingesetzt werden.
Weiter kommt Polycarbonat als zu modifizierendes Material in Frage. Unter "Polycarbonat" seien wie üblich die Polykondensationsprodukte aus 4,4′-Dihydroxydiphenylalkanen ("Bisphenol"), insbesondere des 4,4-Dihydroxydiphenyl-2,2-propans mit Derivaten der Kohlensäure verstanden. (Vgl. DIN 7744). Ihr Molgewicht liegt im allgemeinen im Bereich 20 000 bis 60 000, vorzugsweise 20 000 bis 30 000. Die dynamische Glasübergangstemperatur Tg (dyn) liegt in der Regel bei 160 Grad C; vgl. Kunststoff-Handbuch, Bd. IX, S. 310, Carl Hanser Verlag, Kirk-Othmer 3rd., Vol. 18, S. 479 - 497, J. Wiley, 1982).
Auch hier kann vorteilhaft Formmasse, beispielsweise der im Handel befindlichen Typen eingesetzt werden.
Weiter können die erfindungsgemäßen Schlagzähmodifizierungsmittel mit Vorteil bei Chlorkautschuk (RVC vgl. Kirk-Othmer Encyclopedia of Chemical Technology. 2nd Ed. Vol. 17, pg. 646 - 650, J. Wiley) angewendet werden.

Das Abmischen der zu modifzierenden Kunststoffe mit den erfindungsgemäßen Schlagzäh-Modifizierungsmitteln kann in an sich bekannter Weise durch mechanisches Vermischen, beispielsweise auf Walzen, Knetern oder im Extruder vorgenommen werden. (Vgl. Ullmann's Encyclopädie der Techn. Chemie loc.cit, 4. Auflage Band 13.)

Im allgemeinen liegt der Zusatz der erfindungsgemäßen Schlagzähmodifizierungsmitteln zu den zu modifizierenden Kunststoffen bei 3 bis 60 Gew.-%, wobei stets das Erreichen eines möglichst günstigen Gesamt-Eigenschaftsbildes der modifizierten Kunststoffe angesteuert werden sollte.

Vorteilhafte Eigenschaften

Überraschenderweise sind die erfindungsgemäßen Schlagzähmodifizierungsmittel nach den vorliegenden Erfahrungen nicht nur universell einsetzbar, sie sind auch denjenigen Polymersystemen deutlich überlegen, die eine Anbindung der Zähphase über **gleichartige** Polymere erfahren. Dies gilt insbesondere für PVC, P-α-MS, Copolymere aus α-MS und MMA, PS, PC und Chlorkautschuk. Mit all diesen Polymeren ist die zumindest teilweise auf B) gepfropfte Hartphase A) in der Regel verträglich. Darunter ist zu verstehen, daß die Hartphase für sich allein (d.h. ohne das Elastomere P) mit den Polymeren PVC, P-α-MS, Copolymeren aus α-MS und MMA, PC, PS und Chlorkautschuk zu verträglichen Polymermischungen (mit nur einer Glastemperatur, die nur von der Zusammensetzung der Mischung abhängt) abmischbar ist. Daß diese Polymere A mit all diesen Polymeren verträglich sind, ist um so erstaunlicher als Polymere in der Regel als nicht verträglich angesehen werden.
Genannt sei als Hartphase A) z.B. das Copolymerisat aus Methylmethacrylat und Cyclohexylmethacrylat. Die Verträglichkeit der Hartphase A) mit beispielsweise den oben genannten Polymeren macht die Anbindung der Zähphase zu einem aktiven Prozeß, bei dem Energie frei wird. Das Elastomere wird dadurch aktiv in der Matrix verankert. Daraus resultieren erhebliche Vorteile gegenüber der gleichartigen, passiven Verankerung der Elastomeren-Phase in der Matrix.

Die erfindungsgemäßen Schlagzäh-Modifizierungsmittel, vorzugsweise mit einer Methylmethacrylat-Cyclohexylmethacrylat-Hartphase A) sind somit den herkömmlichen Mitteln zur Verbesserung der Schlagzähigkeit überlegen.

Die hervorragende Eignung der erfindungsgemäßen Schlagzähmodifier soll an den folgenden Beispielen erläutert werden. Die Schlagzähigkeit (SZ) und die Kerbschlagzähigkeit (KSZ) werden nach DIN 53 453 bzw. ISO/R 179 bestimmt. Die VICAT-Erweichungstemperatur (VST) wird nach DIN 53 460 bzw. IS 306 bestimmt.

BEISPIELE

Beispiel 1

Synthese eines allgemein verwendbaren Schlagzähmodifizierungsmittels mit EPDM als Zähphase B)

200 g EPDM (Produkt ® EPSYN55 der Fa. Copolymer) werden als 20%-ige Lösung in Butylacetat vorgelegt. Dazu tropft man unter Rühren bei 120 Grad C innerhalb von 2 Stunden eine Mischung aus

| | |
|---|---|
| 260 g | Methylmethacrylat (MMA) |
| 120 g | Cyclohexylmethacrylat |
| 20 g | Cyclohexylacrylat |
| 6 g | tert. Butylperoctoat |
| 600 g | Butylacetat |

Danach wird 15 Minuten gerührt, auf 80 Grad C gekühlt, eine Mischung aus 10 g Trisallylcyanurat, 10 g MMA und 4 g tert.Butylperoctoat zugesetzt, 2 Stunden bei 80 Grad C und danach 2 Stunden bei 90 Grad C gerührt. Nach Abkühlen wird in Methanol ausgefällt. Es entsteht ein Schlagzähmodifier mit ca.

66 Gew.-% Copolymerisat aus MMA, Cyclohexylacrylat/methacrylat und
33 Gew.-% EPDM

Dieses Material ist beispielsweise als allgemein einsetzbarer Schlagzähmodifier geeignet.

Beispiele 2 und 3

20 Gew.-% des gemäß Beispiel 1 erhaltenen Schlagzähmodifiers werden mit 80 Gew.-% verschiedener Formmassen abgemischt. In allen Fällen resultieren hochschlagzähe Produkte. Dabei ist die Schlagzähigkeit/Kerbschlagzähigkeit besonders hoch bei der aktiven Anbindung (Abmischung mit den andersartigen, verträglichen Polymeren PS oder PC).

Besonders ausgeprägt ist die Verbesserung der Schlagzähigkeit (SZ) beim Polystyrol; hier wird eine Verbesserung der SZ von 16 (Standard-PS) auf 51,9 $KJ/m^2$ erreicht. Die Kerbschlagzähigkeit (KSZ) wird auf 7,5 $KJ/m^2$ angehoben (Standard-PS: keine Angaben: sehr klein).

Beispiel 4

25 Gew.-% des allgemein anwendbaren Schlagzähmodifiers gemaß Beispiel 1 und
75 Gew.-% PVC werden auf einer Walze gemischt. Es resultiert ein Produkt, das
eine Kerbschlagzähigkeit von 45,1 $kJ/m^2$ und eine VST = 82 Grad C
aufweist.

Zum Vergleich: PVC (nicht modifiziert). KSZ: 2,3 $KJ/m^2$, VST: 77 Grad C.

In ähnlicher Weise werden Abmischungen mit PS, PC, PVC P-$\alpha$-MS und Copolymeren aus $\alpha$-MS und MMA hergestellt.

TABELLE 1

| Schlagzähverbesserung durch Zusatz von 20 Gew.-% des erfindungsgemäßen Schlagzähmodifiers gemäß Beispiel 1. | | | | |
|---|---|---|---|---|
| Beispiel Nr. | | | 2 | 3 |
| Modifizierter Kunststoff | | | Polycarbonat* | Polystyrol** |
| VST | | § °C | 127 | 94 |
| | | 16 h/80°C | 127 | 99 |
| | | 16 h/100°C | 128 | 97 |
| SZ (NKS) | 23°C | KJ/$m^2$ | | |
| | | $\bar{x}$ (Mittelwert) | ohne Bruch | 51,9 |
| | -20°C | KJ/$m^2$ | | |
| | | $\bar{x}$ | O.B. | 23,5 |
| | -40°C | KJ/$m^2$ | | |
| | | $\bar{x}$ | O.B. | 19,2 |
| KSZ(NKS) | -23°C | KJ/$m^2$ | | |
| | | $\bar{x}$ | $T^+$ 47,2 | 7,5 |
| | -20°C | KJ/$m^2$ | | |
| | | $\bar{x}$ | 23,0 | 2,1 |
| | -40°C | KJ/$m^2$ | | |
| | | $\bar{x}$ | 11,6 | 1,3 |

§ wie angeliefert
* [R] Makrolon 3100 (Fa. Bayer)
** Polystyrol 158 K (Fa. BASF)
+ nur teilweise gebrochen

Beispiel 5

Synthese eines allgemein verwendbaren Schlagzähmodifizierungsmittels mit EPDM als Zähphase B).

Man wendet das Verfahren aus Beispiel 1 an, mit dem Unterschied, daß eine andere Monomerzusammensetzung angewendet wird:

60 Gew.-% Methylmethacrylat
20 Gew.-% Cyclohexylmethacrylat
20 Gew.-% Butylmethacrylat

Nach der Aufarbeitung mittels Ausfällung durch Zugabe einer entsprechenden Menge Methanol erhält man einen Schlagzähverbesserer bestehend aus

33 Gew.-% EPDM und
67 Gew.-% eines Copolymeren der Zusammensetzung
60 Gew.-% Methylmethacrylat
20 Gew.-% Cyclohexylmethacrylat
20 Gew.-% Butylmethacrylat

Beispiel 6

15 Gew.-Teile des allgemein verwendbaren Schlagzähmodifizierungsmittels aus Beispiel 5 werden mit 85 Gew.-% Polystyrol 158K (BASF) abgemischt.
Man erhält ein weißes, homogenes Polymer mit einem VICAT-Wert von 97 Grad C (nach 16 Stunden Trocknung bei 80 Grad C). Die Schlagzähigkeit (IZOD) liegt bei 51 $KJ/m^2$, die Kerbschlagzähigkeit bei 3,0 $Kg/m^2$. Auf analoge Weise läßt sich auch die Schlagzähigkeit von PVC, von Copolymeren des α-Methylstyrols mit Styrol von Copolymeren des α-Methylstyrols und des Methylmethacrylats und von SAN verbessern. Die Verbesserung ist jedoch nicht ganz so bedeutend wie im Fall der Schlagzähmodifizierungsmittel, die in den Beispielen 1 und 7 beschrieben werden.

Beispiel 7

Das Verfahren gemaß Beispiel 1 findet Anwendung außer daß eine anderes Monomerengemisch eingesetzt wird:

78 Gew.-% Methylmethacrylat
20 Gew.-% Cyclohexylmethacrylat
2 Gew.-% Cyclohexylacrylat

Nach der Aufarbeitung erhält man ein Schlagzähmodifizierungsmittel, das allgemein einsetzbar ist, mit folgender Zusammensetzung:

33 Gew.-% EPDM
67 Gew.-% eines Copolymeren der folgenden Zusammensetzung:
78 Gew.-% Methylmethacrylat
20 Gew.-% Cyclohexylmethacrylat
2 Gew.-% Cyclohexylacrylat.

Beispiel 8

Das allgemein einsetzbare Schlagzähmodifizierungsmittel aus Beispiel 7 wird mit Polystyrol 158 K (BASF) in verschiedenen Verhältnissen abgemischt. In Abhängigkeit vom Gehalt des Modifizierungsmittels bestimmt man an spritzgegossenen Normkleinstäben die folgenden mechanischen Werte:

| Zusatz an Schlagzähmodifizierungsmittel (Gew.-%) | VICAT-Erweichungstemperatur* (Grad C) | Schlagzähigkeit ($KJ/m^2$) | Kerbschlagzähigkeit ($KJ/m^2$) |
|---|---|---|---|
| 10 | 101 | 30 | 2,9 |
| 20 | 98 | 42 | 3,9 |
| 30 | 96 | 52 | 4,1 |

* Bestimmung nach 16-stündigem Trocknen bei 80 Grad C.

Beispiel 9

Das allgemein verwendbare Schlagzähmodifizierungsmittel aus Beipsiel 7 wird mit einem Styrol-Acrylnitril-Copolymer (SAN) gemischt.
Bei einem Gehalt von nur 20 Gew.-% des Modifizierungsmittels und 80 Gew.-% SAN (LURAN ® 368 R, BASF) sind die Schlagzähigkeit und insbesondere die Kerbschlagzähigkeit deutlich verbessert verglichen mit dem nicht-modifizierten Material.

Nicht-modifiziertes LURAN ® 368 R besitzt einen Schmelzindex (200/5) von 0,7 g/10 min (bestimmt nach ISO-Empfehlung No. 317) einen VICAT-Wert von 101 Grad C, eine Dichte von 1,08 $g/cm^3$, eine Schlagzähigkeit von 18 $KJ/m^2$ und eine Kerbschlagzähigkeit von 3,0 $KJ/m^2$.

Beispiel 10

Das allgemein verwendbare Schlagzähmodifizierungsmittel aus Beispiel 7 wird mit Polycarbonat (MAKROLON ® 3100, Bayer) abgemischt.
Bei einem Gehalt von 20 Gew.-% an dem Modifizierungsmittel werden Werte für die Schlagzähigkeit und die Kerbschlagzähigkeit erhalten, die im wesentlichen denen des modifizierten Polycarbonats gemaß Beispiel 1 entsprechen (vgl. Tabelle 1, Beispiel 2).

Beispiel 11

Das allgemein verwendbare Schlagzähmodifizierungsmittel aus Beispiel 7 wird mit PVC abgemischt. Bei einem Gehalt von 20 Gew.% an dem Modifizierungsmittel erhält man ein weißes Produkt, dessen Kerbschlagzähigkeit mehr als doppelt so hoch ist wie die unmodifizierten PVC's.

Beispiel 12

Das allgemein anwendbare Schlagzähmodifizierungsmittel aus Beispiel 7 wird mit einem Copolymeren, bestehend aus 68 Gew.-% Methylmethacrylat, 30 Gew.-% α-Methylstyrol und 2 Gew.-% Methacrylat (Molekulargewicht ca. 120 000). Die so erhältene Mischung kann leicht verarbeitet werden. Bei einem Gehalt an Modifizierungsmittel von nur 20 Gew.-% hat sich nur die Kerbschlagzähigkeit mehr als verdoppelt, verglichen mit dem nicht-modifizierten Material.

Beispiel 13

Synthese eines allgemein verwendbaren Schlagzähmodifizierungsmittels mit einem hohen Gehalt an Elastomeren.
Man wendet das Verfahren gemäß Beispiel 1 an mit dem Unterschied, daß nur 10 Gew.-% der Monomerenmischung (bezogen auf in Butylacetat gelöstes EPDM) angewendet wird:

| | |
|---|---|
| 52 Gew.-% | Methylmethacrylat |
| 45 Gew.-% | Cyclohexylmethacrylat |
| 3 Gew.-% | Cyclohexylacrylat |

Das gebildete Schlagzähmodifizierungsmittel besteht zu 50 Gew.-% aus EPDM, zu 50 Gew.-% aus einem Copolymer bestehend aus:

| | |
|---|---|
| 52 Gew.-% | aus Methylmethacrylat |
| 45 Gew.-% | aus Cyclohexylmethacrylat |
| 3 Gew.-% | aus Cyclohexylacrylat |

Beispiel 14

20 Gew.-% des allgemein verwendbaren Schlagzähmodifizierungsmittels aus Beispiel 13 und 80 Gew.-% aus Polystyrol 158 (BASF) werden auf einer Walze gemischt. Aus dieser Mischung stellt man auch durch Spritzgießen Kleinnormstäbe her.
Das auf diese Weise erhältene Material zeigt die folgenden Daten:

| | | |
|---|---|---|
| Schlagzähigkeit (Normkleinstab) | | 28,0 $KJ/m^2$ |
| Kerbschlagzähigkeit | 23 Grad C | 5,4 $KJ/m^2$ |
| (Normkleinstab) | 0 Grad C | 4,0 $KJ/m^2$ |
| | -10 Grad C | 3,6 $KJ/m^2$ |

Beispiel 15

Synthese eines allgemein verwendbaren Schlagzähmodifizierungsmittels mittels einer zweiphasigen Emulsionspolymerisation.

Nach dem Polymerisationszulaufverfahren bei 80 Grad C über 4 Stunden wird die folgende Polymerdispersion hergestellt:

Festbestandteile:

40 Gew.-% (Rest = Wasser)

Zusammensetzung des Kerns:

| | |
|---|---|
| 98 Gew.-% | Butylacrylat |
| 1 Gew.-% | Allylmethacrylat |
| 1 Gew.-% | Trimethylolpropantriacrylat |

Zusammensetzung der Schale:

| | |
|---|---|
| 65 Gew.-% | Methylmethacrylat |
| 30 Gew.-% | Cyclohexylmethacrylat |
| 5 Gew.-% | Cyclohexylacrylat |

Der Durchmesser der Dispersionspartikel liegt bei ca. 400 nm, das Gewichtsverhältnis Kern zu Schale beträgt ca. 65 : 65.

Man erhält das Polymere als Festprodukt durch Gefrierkoagulation gefolgt von Trocknung. Mischt man das allgemein verwendete Schlagzähmodifizierungsmittel mit Polystyrol, Polycarbonat, PVC, SAN, Copolymeren aus Methylacrylat und $\alpha$-Methylstyrol ab, so erweist sich die Schlagzähigkeit der Mischungen in jedem Fall als deutlich verbessert verglichen mit dem nicht-modifizierten Polymer. Bei Polycarbonat liegen die Verbesserungen mehr auf der Seite der Kerbschlagzähigkeit.

## Patentansprüche

**1.** Polymerkomposition hergestellt aus 40 bis 97 Gew.-% Kunststoff mit 3 - 60 Gew-% eines Schlagzähmodifizierungsmittels

dadurch gekennzeichnet,

daß das Schlagzähmodifizierungsmittel besteht aus:

A) 10 - 80 Gew.-% eines Polymeren der Formel

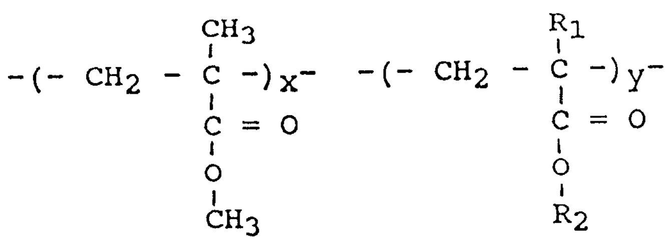

worin $R_1$ für H oder Methyl und $R_2$ für einen gegebenenfalls substituierten Cycloalkylrest mit 5 - 7 Kohlenstoffatomen steht und x und y sich - gegebenenfalls zusammen mit weiteren in Mengen von 0 bis 20 Gew.-% vorhandenen Monomeren - zu 100 Gew.-% ergänzen, mit der Maßgabe, daß y einen Bereich von 5 - 50 Gew.-% bezeichnet, und

B) 90 - 20 Gew.-% aus einem gegebenenfalls vernetzten Polymeren P mit einer Glastemperatur Tg < 10 Grad C, bevorzugt < -10 Grad C, das wenigstens teilweise mit A) kovalent verknüpft ist.

2. Polymerkomposition gemäß Anspruch 1, dadurch gekennzeichnet, daß die Komponente B) des Schlagzähmodifizierungsmittels zu mehr als 5 Gew.-% kovalent mit der Komponente A) verknüpft ist.

3. Polymerkomposition gemäß den Ansprüchen 1 und 2, dadurch gekennzeichnet, daß der zu modifizierende Kunststoff ausgewählt ist aus der Gruppe Polyvinylchlorid, Polystyrol, Poly-α-methylstyrol, Copolymere aus Methylmethacrylat und 20 - 50 Gew.-% α-Methylstyrol, Polycarbonat und Chlorkautschuk.

**Claims**

1. Polymer composition prepared from 40 to 97 wt.% of plastic material which comprises 3 to 60 wt.% of an impact-resistance modifying agent, characterised in that the impact-resistance modifying agent comprises

A) 10 to 80 wt.% of a polymer of Formula

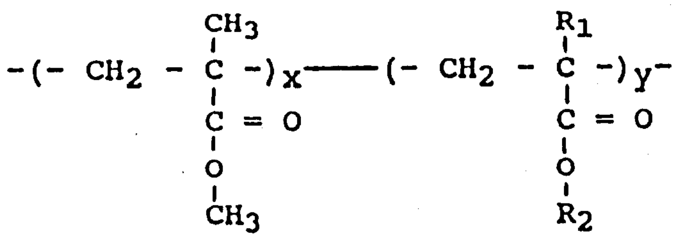

wherein $R_1$ is H or methyl and $R_2$ is an optionally substituted cycloalkyl group having 5 to 7 carbon atoms, and x and y, optionally together with further monomers in amounts of 0 to 20 wt.%, make up 100 wt.%, with the proviso that y represents a range of from 5 to 50 wt.%, and

B) 90 to 20 wt.% of an optionally cross-linked polymer P having a glass transition temperature $Tg < 10°C$, preferably $< -10°C$ which is covalently bonded, at least partially, with A).

2. A polymer composition according to claim 1, characterised in that the component B) of the impact-resistance modifying agent is, in an amount of more than 5 wt.%, covalently bonded with the Component A).

3. A polymer composition according to claims 1 and 2, characterised in that the plastic material to be modified is selected from the group of polyvinyl chloride, polystyrene, poly-α-methylstyrene, copolymers comprising methyl methacrylate and 20 to 50 wt.% of α-methylstyrene, polycarbonate and chlorine rubber.

**Revendications**

1. Composition de polymère préparée à partir de 40 à 97% en poids de matière plastique avec 3 à 60% en poids d'un agent modifiant la résilience, caractérisée en ce que l'agent modifiant la résilience se compose de:

A) 10 à 80% en poids d'un polymère de formule

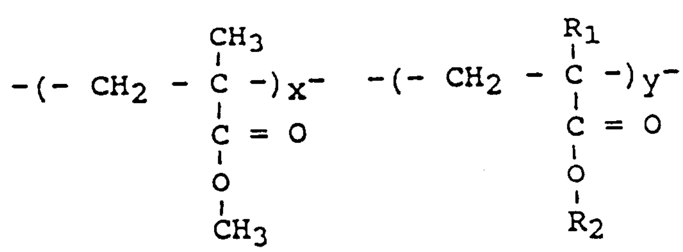

dans laquelle $R_1$ est mis pour un atome d'hydrogène ou un reste méthyle, $R_2$ est mis pour un reste cycloalkyle à 5-7 atomes de carbone éventuellement substitué et la somme de x et y s'élève - éventuellement avec d'autres monomères présents dans des proportions de 0 à 20% en poids - à 100% en poids, étant spécifié que y définit une gamme de 5 à 50% en poids, et

B) 90 à 20% en poids d'un polymère éventuellement réticulé P ayant une température de transition vitreuse Tg inférieure à 10°C, de préférence inférieure à -10°C, qui est enchaîné au moins partiellement à A) par une liaison covalente.

**2.** Composition de polymère selon la revendication 1, caractérisée en ce que le composant B) de l'agent modifiant la résilience est enchaîné à raison de plus de 5% en poids au composant A) par une liaison covalente.

**3.** Composition de polymère selon la revendication 1 ou 2, caractérisée en ce que la matière plastique à modifier est choisie dans le groupe du polychlorure de vinyle, du polystyrène, du poly-α-méthylstyrène, des copolymères de méthacrylate de méthyle et de 20 à 50% en poids d'α-méthylstyrène, du polycarbonate et du caoutchouc chloré.